(19) Europäisches Patentamt
European Patent Office
Office européen des brevets

(11) Publication number: **0 322 150**
**A2**

(12) # EUROPEAN PATENT APPLICATION

(21) Application number: **88311811.9**

(51) Int. Cl.4: **C09D 5/44 , C08F 299/02**

(22) Date of filing: **14.12.88**

(30) Priority: **22.12.87 GB 8729797**

(43) Date of publication of application:
**28.06.89 Bulletin 89/26**

(84) Designated Contracting States:
**BE DE ES FR GB IT NL SE**

(71) Applicant: **IMPERIAL CHEMICAL INDUSTRIES PLC**
**Imperial Chemical House Millbank**
**London SW1P 3JF(GB)**

(72) Inventor: **Doroskowski, Andrew**
**8 Moyleen Rise**
**Marlow Buckinghamshire(GB)**

(74) Representative: **Johnston, Walter Paul et al**
**Imperial Chemical Industries PLC Legal Department: Patents PO Box 6**
**Welwyn Garden City Herts, AL7 1HD(GB)**

(54) **Copolymer.**

(57) The present invention provides a co-polymer that is capable of forming sterically stabilised dispersions in aqueous media, comprising steric stabilising units having water soluble poly(oxyalkylene) chains, structural units and amine group containing units, the amine group containing units comprising tertiary amine groups or an acid salt thereof or quaternary ammonium salt groups; the amount of amine group-containing units being such that the co-polymer contains from 0.025 to 0.5 milli-equivalents of amine per gram of co-polymer.

The co-polymers are useful as film-formers in their own right and also as steric stabilisers for other film-forming polymers in non-ionic electrodepositable coatings.

EP 0 322 150 A2

# CO-POLYMER

This invention relates to a novel class of amine group-containing co-polymers that are capable of forming sterically stabilised dispersions in aqueous media, to a process for their preparation and their use in coating.

The co-polymers are useful as film-formers in their own right and also as steric stabilisers for other film-forming polymers in non-ionic electrodepositable coatings.

It is known that certain organic film-forming polymers deposit from aqueous dispersions on to a target electrode when an electric current is passed between the target electrode and a counter-electrode immersed in the dispersion. In broad terms, such film-forming polymers fall within two classes. The first class is capable of forming charge stabilized dispersions. The second class is capable of forming sterically stabilized dispersions.

In the first class, disperse particles of film forming polymer are stabilized by ionised groups. This confirming of dispersion stability and its application to painting processes has been extensively reviewed for example:-

Fundamental Aspects of Electrodeposition of Paint: F Beck, Progress in Organic Coatings 1976, 4, 1-60.
Skeist Laboratories Report, Coatings III November 1980 538-547.
Advances in Colloid and Interface Science 1982, 16, 17-30.
ACS DW. Organic Coatings and Plastic Chem. 1980, 43, 154-57.

Charge stabilized dispersions are dependent for stability on electrostatic (or coulombic) repulsion energies. These electrostatic repulsion energies arise from ionised groups on the polymer molecule. Such ionic stabilization can be provided by ionised carboxylic acid groups, or ionised amine groups (for example acid addition salt or quaternary ammonium salt groups).

One example of an ionically stabilized co-polymer containing ionised amine groups is described in EP-A-0042502.

In the second class, disperse particles of film forming polymer are stabilised by being surrounded by a sheath of solvated polymeric material such that if two such particles come into contact, as for example during particle collision, then particle-particle repulsion energy arises as a result of conformational changes in the solvated layer surrounding the particles and this energy holds the particles apart. There is no reliance on the presence of charge for dispersion stability. The nature of steric stabilisation is discussed by D H Napper in J Colloid and Interface Sci.,1977 58, 390-407, and more recently in "Polymeric Stabilisation of Colloidal Particles" by D H Napper; Academic Press 1983 ISBN 0-12-513980-2.

GB-A-2130218 describes how certain sterically stabilised dispersions based on certain stabilising polymeric, non-ionic hydrophilic moieties can be made to electrodeposit on to a cathode from aqueous dispersion. However, not all sterically stabilised emulsions can be made to electrodeposit in this way.

A method of identification of such compositions that do deposit is proposed in GB-A-2130218. An explanation for the observation that certain non-ionic sterically stabilised emulsions electrodeposit and others do not is outlined in the Journal of Colloid and Surface Science, of January 1986.

A clear distinction can be drawn between steric stabilization and charge stabilization. Charge-stabilized emulsions are characterised by loss of stability on the addition of ions which bring about a decrease in the electrostatic repulsion energy because of a decrease in the double layer thickness as explained by Overbeek in Advances in Colloid and Interface Science cited above.

Furthermore, the coagulative properties of added electrolyte to charge stabilized emulsions such as those used in cathodic electrocoats made from cationic emulsions are well known and described by the long established Schultz-Hardy Rule.

Sterically stabilized dispersions can be distinguished from charge stabilized dispersions by their much greater resistance to the presence of electrolyte especially electrolyte comprising higher valency ions for example sodium hexametaphosphate solution.

We have now found to our surprise, that by incorporating some ionisable groups into a sterically stabilised emulsion, we can now make sterically stabilised emulsions electrodeposit, where the same emulsions, without these ionisable groups would not electrodeposit. Furthermore, the incorporation of such groups improves the commercially desirable electrodepositable properties of the sterically stabilised emulsion.

Accordingly, the present invention provides a co-polymer that is capable of forming sterically stabilised dispersions in aqueous media, comprising steric stabilising units having water soluble poly(oxyalkylene) chains, structural units and amine group containing units, the amine group containing units comprising tertiary amine groups or an acid salt thereof or quaternary ammonium salt groups; the amount of amine

group-containing units being such that the co-polymer contains from 0.025 to 0.5 milli-equivalents of amine per gram of co-polymer.

The amount of amine group containing units in the co-polymer of the invention is such that there is at least 0.025 milli-equivalents of amine per gram of co-polymer. For example the co-polymer can contain minimum levels from 0.05, 0.15, 0.2 or 0.3 milli-equivalents per gram and maximum levels of 0.4 or 0.45 milli equivalents per gram.

The co-polymer dispersions described here are sterically stabilized. This can be demonstrated by their greater resistance to the presence of electrolyte in particular, sodium hexametaphosphate as demonstrated in the Examples. Unlike the polymers described in GB-A-2130218, they also contain amine groups. These emulsions can be differentiated from cationic charge stabilized emulsions in that they can withstand the addition of polycarboxylic acid salts as shown in the Examples which will coagulate cationically stabilized emulsions; but make sterically stabilized emuslions change their electrodeposition characteristics from cathodic deposition to anodic deposition on the passage of current.

The co-polymer can be a condensation polymer, an epoxy resin or an addition polymer.

Condensation polymers of this invention consist of structural units derived from di-, tri- and tetra carboxylic acids of general formula (1):-

$A(-CO)-_a$ (1)

where A is the residue of an aromatic, alicyclic or aliphatic carboxylic acid and a is 2, 3 or 4; and units derived from di- or triols of general formula (2):-

$D(-O)-_b$ (2)

where D is the residue of an aromatic, alicyclic or aliphatic di- or triol and b is 2 or 3; amine group containing units of formula (3):-

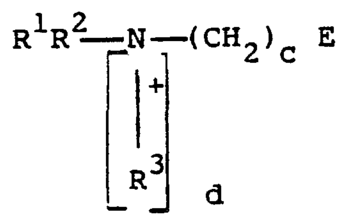

(3)

where $R^1$ is $C_{1-6}$ alkyl,

$R^2$ is $C_{1-6}$ alkyl,

$R^3$ is hydrogen, $C_{1-6}$ alkyl or benzyl or

$R^1$ and $R^2$ together represent the residue of a piperidine or morpholine group,

E is -O-, -N<, -NH-, -OCO- or $-CO_2-$,

c is from 2 to 6;

d is zero in the case of a free amine or 1 in the case of an acid addition salt or a quaternary ammonium salt and

steric stabilizing units having water soluble poly(oxyalkylene) chains.

By way of example, one class of carboxylic acids from which the structural units can be derived are $C_{2-6}$ alkane dicarboxylic acids for example ethane-1,2-dicarboxylic acid, butane-1,4-dicarboxylic acid and hexane-1,6-dicarboxylic acid.

A further class of carboxylic acids from which the structural units can be derived are six membered alicyclic and aromatic carboxylic acids containing 2,3 or 4 carboxyl groups and in particular cyclohexane-1,2-dicarboxylic acid, cyclohex-1-ene-1, 2-dicarboxylic acid, phthalic acid, isophthalic acid, trimellitic acid and benzene-1,2,4,5-tetracarboxylic acid.

These structural units can also be derived from Diels-Alder adducts obtained from optionally substituted cyclopentadiene and maleic anhydride. In particular, the unit can be derived from the Diels-Alder adduct of cyclopentadiene and maleic anhydride (Nadic anhydride) or the Diels-Alder adduct of 1,2,3,4,5,-pentachlorocyclopentadiene and maleic anhydride (chlorendic anhydride).

Preferably the polycarboxylic acid unit is derived from phthalic acid, iso-phthalic acid and trimellitic acid.

The unit of general formula (2) can be the residue of an aromatic, alicyclic or aliphatic diol or triol.

The aliphatic diol or triol can be a straight or branched chain $C_{2-10}$ alkane diol or $C_{3-10}$ alkane triol. Examples of such compounds are ethane-1,2-diol, propane-1,3-diol, propane-1,2-diol, butane-1,4-diol, pentane-1,5-diol, hexane-1,6-diol, decane-1,10-diol, propane-1,2,3-triol and trimethylolpropane.

An example of an aromatic diol is bisphenol-A.

One class of amine group-containing units of formula (3) is where E is -O-, and this class has general formula (4):-

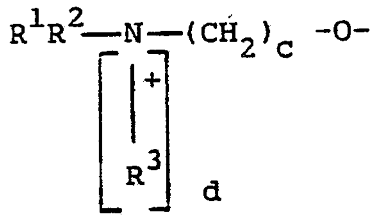

(4)

where $R^1$ to $R^3$, *c* and *d* are as defined with reference to formula (3).

A further class of amine group-containing units of formula (3) is where E is -N< and this class has the general formula (5):-

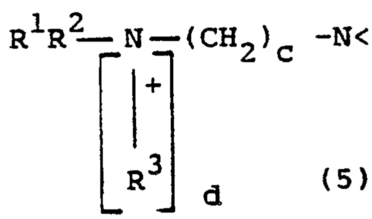

(5)

where $R^1$ to $R^3$, *c* and *d* are as defined with reference to formula (3).

A further class of amine group containing units of formula (3) is where E is -NH- and this class has the general formula (6):-

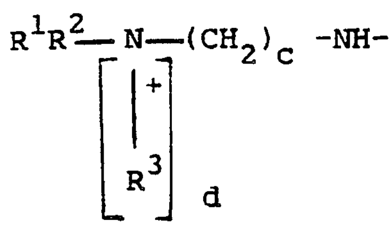

(6)

where $R^1$ to $R^3$, *c* and *d* are defined with reference to formula (3).

Examples of $C_{1-6}$ alkyl groups for $R^1$ to $R^3$ are methyl, ethyl and *n*-propyl.

Examples of values for *c* are 2,3,4 and 6.

Examples of $R^1R^2N(CH_2)_c$- groups are:-

NN-dimethylamino ethyl, NN-dimethylaminopropyl, NN-dimethylaminobutyl and NN-dimethylamino hexyl.

Examples of $R^1R^2R_3N^+ (CH_2)_c$ groups are :-

NNN-trimethylaminoethyl, NNN-trimethylaminopropyl, NNN-trimethylaminobutyl and NNN-trimethylaminohexyl.

Epoxy resins of this invention comprise structural units of general formula (7):-

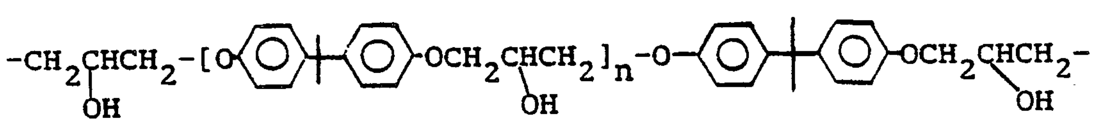

(7)

where n is from 0 to 4. For example n ca be 0.1, 2 or 3.7. The epoxy resin precursors from which the structural units of formula (7) are obtained are available commercially as complex mixtures, hence the value of n can be a fraction.

Preferably the molecular weight is from 360 to 7,000.

The amine group-containing units for this class of co-polymer have general formula (8):-

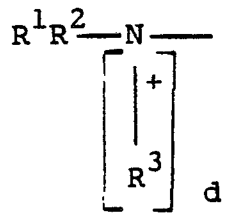

(8)

where $R^1$ to $R^3$ and d are as defined with reference to formula (3).

Referring to $R^1$ to $R^3$, examples of substituents and preferred substitutents are as described with reference to formula (3).

Examples of groups $R^1R^2N$- are:-
NN-dimethylamino, NN-diethylamino, NN-dipropylamino, NN-dibutylamino and NN-dihexylamino.

Examples of groups $R^1R^2R^3N^+$ - are:-
NNN-trimethylamino, NNN-methyldiethylamino, NNN-triethylamino and NNN-benzyldiethylamino.

The epoxy resins of this invention do of course also contain steric stabilizing units having water soluble poly(oxyalkylene) chains.

A further class of co-polymers within the scope of this invention are addition polymers comprising a plurality of structural units which are the same or different and are of formula (9):-
$-CH_2-CR^4R^5-$ (9)
where $R^4$ is hydrogen or $C_{1-6}$ alkyl and
$R^5$ is a group $-CO_2R^6$ where $R^6$ is $C_{1-10}$ alkyl or provided $R^4$ is hydrogen, $R^5$ is phenyl optionally substituted with one or more $C_{1-4}$ alkyl groups;
and amine groups containing units of formula (10):-
$-CH_2-CR^7R^8-$ (10)
where $R^7$ is hydrogen or $C_{1-6}$ alkyl and
$R^8$ is a group:-

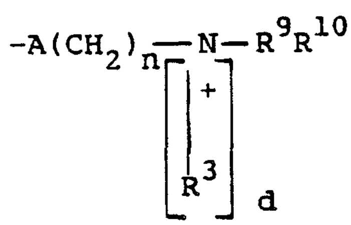

where A is a group $-CO_2-$, -CONH-, n is from 2 to 6 or provided $R^7$ is hydrogen, $R^8$ is pyridino, N-$C_{1-6}$ alkyl pyridino or N-benzyl pyridino;
$R^9$ is $C_{1-6}$ alkyl;
$R^{10}$ is $C_{1-6}$ alkyl or $R^9$ and $R^{10}$ taken together form a piperidino or morpholino group;
$R^3$ is hydrogen, $C_{1-6}$ alkyl or benzyl and
d is zero or 1.

Referring to the unit of formula (9), examples of $C_{1-6}$ alkyl groups for $R^4$ are methyl, ethyl and n-propyl. Preferably $R^4$ is hydrogen or methyl.

Examples of $C_{1-10}$ alkyl groups for $R^6$ are methyl, ethyl, n-propyl, n-butyl, n-pentyl, n-hexyl, n-octyl, 2-ethylhexyl and n-decyl. When $R^4$ is methyl and $R^5$ is a group $-CO_2R^6$, preferably $R^6$ is also methyl. When $R^4$ is hydrogen and $R^5$ is a group $-CO_2R^6$, preferably $R^6$ is 2-ethylhexyl.

When $R^5$ is optionally substituted phenyl, examples of optional $C_{1-4}$ alkyl substituents for $R^5$ are methyl, ethyl, n-propyl, n-butyl and t-butyl. When $R^5$ is optionally substituted phenyl, preferably it is phenyl

or 4-t-butylphenyl and preferably $R^4$ is hydrogen.

One particular class of addition co-polymer within the scope of this invention comprises structural units of formula (9) where $R^4$ is methyl and $R^5$ is $-CO_2R^6$ where $R^6$ is methyl and structural units of formula (9) where $R^1$ is hydrogen and $R^5$ is $-CO_2R^6$ where $R^3$ is 2-ethylhexyl.

A futher class of co-polymer within the scope of this invention comprises in addition to the structural units for formula (9), auxiliary structural units of formula (11):-

$-CH_2-CR^{12}R^{13}-$ (11)

where $R^{12}$ is hydrogen or $C_{1-6}$ alkyl (particularly methyl) and $R^{13}$ is $-CO_2R^{14}$ where $R^{14}$ is 1,2-epoxypropyl or 1-(4-nitrobenzoyloxy)-2-hydroxylpropyl.

Referring to the amine group-containing unit of formula (10), examples of values for n are 2 and 3.

Preferably A is $-CO_2-$ in which case n is 2. Examples of $C_{1-6}$ alkyl groups for $R^9$, $R^{10}$ and $R^{11}$ are methyl, ethyl and n-propyl.

Preferably $R^9$ and $R^{10}$ are both methyl, d is 1 and $R^3$ is benzyl.

Steric stabilising units comprise two components. These are respectively the solvatable poly-(oxalkylene) chain component, that is the component which is solvatable by the aqueous carrier, and the linking component which attaches to the remainder of the polymer in dispersion.

The steric stabilising unit can be derived from a preformed block or graft co-polymer.

The solvatable component can be derived from polyethylene glycols and their mono $C_{1-4}$ alkyl ethers and poly(ethylene oxide)-poly(propyleneoxide) co-polymers containing at least 40% of ethylene oxide.

Preferably the solvatable component is derived from a polyethylene glycol or a polyethylene glycol monomethyl ether of molecular weight 700 to 4,000.

Where the steric stabiliser unit is part of a condensation polymer or a polyepoxide, linking is achieved by reacting a glycol, poly(ethyleneoxide)-poly(propylene oxide) or a monoether thereof or an amine or carboxylic acid derivative thereof with the condensation polymer during its formation or with the polyepoxide.

In these circumstances the linking component is, in the case of an epoxide a covalent bond, a primary or secondary amine group or a carboxyl group or in the case of a polyester is an ester or an amide moiety.

Where the polymer is an acrylate, the solvatable component is a poly(oxyalkylene) chain as previously discussed. The component can be derived from polyethylene glycols and their mono $C_{1-4}$ alkyl ethers, poly(ethylene oxide)-poly(propylene oxide) or -(poly butylene oxide) co-polymers containing at least 40% of ethylene oxide and the mono alkyl (especially monomethyl) ethers of such components.

The solvatable component in these circumstances, is incorporated in to the polymer by polymerising an acrylate or methacrylate of the corresponding glycol.

An example of such acrylate derivates are compounds of general formula (12):-

$$CH_3O(C_2H_4O)_x(C_4H_8O)_yCO.\overset{CH_3}{\overset{|}{C}} = CH_2 \quad (12)$$

where x and y have values corresponding to molecular weight for the poly(oxyethylene) and poly-(oxybutylene) blocks of 2,000 and 7,000 respectively. This substance is readily obtained by condensing methanol with ethylene oxide an subsequently with butylene oxide in the requisite proportions, and the reacting the product with methacryl chloride, or carrying out an ester interchange reaction between the product and methyl methacrylate in the presence of a catalytic amount of tetra-isopropyl titanate.

Another class of acrylate derivatives has the general formula (13):-

$CH_2 = CH.CO.O(C_4H_8O)_y(C_2H_4O)_x OCH_3$ (13)

where x and y have the same values as above.

Preferably the stabilising unit is derived from a compound of formula (12) or (13) where y is zero and x is from 11 to 90 and especially from 33 to 66.

Sterically stabilised dispersions of non-ionic film-forming polymers derived from acrylate derivatives of this type can be prepared as described in GB-A-2124636 and GB-A-2127835.

The co-polymers of this invention can be free amines, acid addition salts or quaternary ammonium salts.

Where the salt is an acid addition salt, the salt forming acid can be any organic or inorganic acid that is inert to the co-polymer.

Examples of organic acids are $C_{1-6}$ alkanoic acids (for example acetic acid), chloracetic acid, trifluoracetic acid, methanesulphonic acid, ethanesulphonic acid, and toluene sulphonic acid.

Examples of inorganic acids are hydrochloric acid, and sulphuric acid.

Where the salt is a quaternary ammonium salt, the anion can be organic or inorganic.

For example it can be a $C_{1-6}$ alkanoate particularly acetate or it can be chloracetate, trifluoracetate, methanesulphonate, ethanesulphonate toluenesulphonate, chloride, bromide or sulphate.

The co-polymers of this invention can be prepared by a process which comprises reacting together precursors for the structural units, precursors for the amine group-containing units and precursors for steric stabilizing units and thereafter optionally quaternising or salifying the product so obtained.

Precursors for structural units are smaller molecules which react together to form the structural unit in the polymer produced or a pre-formed polymer unit which reacts with precursors for the amine group-containing unit or the steric stabilizing unit to produce the complete co-polymer. Precursors for the amine group-containing unit and the steric stabilizing unit are small molecules which react with the precursors for the structural units to produce the complete co-polymer.

For example in the case of a condensation polymer particularly a polyester, precursors for the structural unit are carboxylic acids and polyols. In the case of epoxides, the precursor for the structural unit is a pre-formed epoxy resin. In the case of addition polymers the precursors for the structural units are monomers.

The condensation polymers of this invention can be prepared by analogy with known methods for example by reacting an acid of general formula (14):-

$A\text{-}(CO_2H)_a$ (14)

where A and a is as defined with reference to formula (1) or an activated esterifying derivative thereof (for example an anhydride) with a di- or triol of general formula (15):-

$D\text{-}(OH)_b$ (15)

where D and b are as defined with reference to formula (2) or an esterifying derivative thereof, an amine of formula (16):-

$R^1R^2N(CH_2)_c\text{-}NHR^{15}$ (16)

where $R^1$, $R^2$ and c are previously defined and $R^{15}$ is hydrogen or $C_{1-6}$ alkyl, and a polyethylene glycol, a polyethyleneglycol mono-$C_{1-4}$ alkyl ether, a poly(ethylene oxide)-poly(propylene oxide or -poly butylene oxide co-polymer containing at least 40% of polyethylene oxide; and thereafter optionally quaternising the product so obtained with a quaternis ing agent $R^3X$ where $R^3$ is $C_{1-6}$ alkyl or benzyl or salifying the product so obtained with an addition salt-forming acid.

The reaction between the acid, alcohol, amine and the precursor for the steric stabilizing group can be carried out in an inert solvent for example toluene at moderately elevated temperatures for example 100 -280 °C depending on the reflux point of the solvent.

The quaternisation reaction can be carried out in moderate temperatures for example from room temperature to 130 °C optionally in the presence of a solvent.

The salification step can be carried out in the presence of a solvent at moderate or slightly elevated temperatures, for example ambient temperature.

Co-polymers according to this invention that are based on epoxy resins can also be prepared by analogy with standard methods. For example an epoxy resin of formula (17):-

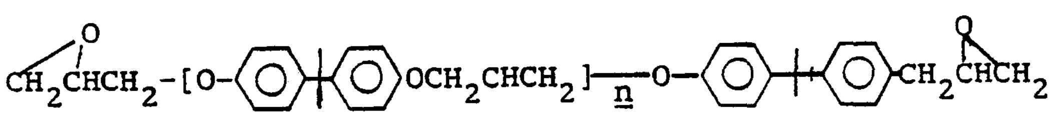

(17)

where n is as previously defined with a compound of formula (18):-

$R^1R^2NH$ (18)

where $R^1$ and $R^2$ are as defined with reference to formula (8) and a polyethylene glycol, a polyethyleneglycol mono-$C_{1-4}$ alkyl ether, a poly(ethylene oxide)-poly(propylene oxide) or -poly butylene oxide co-polymer containing at least 40% of polyethylene oxide; and thereafter optionally quaternising the product so obtained with a quaternising agent $R^3X$ where $R^3$ is $C_{1-6}$ alkyl or benzyl and salifying the product so obtained with an addition salt forming acid.

The reaction between the epoxide of formula (13) the compound of formula (18) and the precursor for the steric stabilizing group can be carried out by standard methods for example at moderate temperatures (70-150 °C) in the presence of a solvent.

The quaternising reaction can be carried out as previously described.

Where the co-polymer is an addition co-polymer, it can also be made by analogy with standard methods, or example by addition polymerisation in the presence of an initiator of monomers for formula (19):-

$CH_2=CR^4R^5$ (19)

where $R^4$ and $R^5$ are as defined with reference to formula (9);
amine group containing monomers of formula (20):-

$CH_2 = CR^7R^8$ (20)

where $R^7$ and $R^8$ are as defined with reference to formula (10) where d is zero;
and stabiliser group-containing monomers for formula (12):-

$$CH_3O(C_2H_4O)_x(C_4H_8O)_yCO.\overset{\overset{\large CH_3}{|}}{C} = CH_2 \quad (12)$$

or formula (13):-

$$CH_2 = CH.CO.O(C_4H_8O)_y(C_2H_4O)_x OCH_3 \quad (13)$$

where x and y are as previously defined and the product so obtained optionally quaternised or salified.

The addition polymerisation of monomers of formula (19), (20), (12) and (13) can be carried out in solution or in dispersion.

For a solution polymerisation process, the monomers are fed into a solvent continuously at a rate which approximates to the rate of polymer formation.

Examples of solvents that can be used in the process of this invention are hydrocarbons, especially toluene, $C_{1-4}$ alkyl- $C_{2-6}$ alkanoate esters, especially ethyl acetate and $C_{1-4}$ ketones for example acetone, methyl ethylketone and methyl isobutylketone.

The reaction can be carried out at moderate temperatures. The particular temperature depends upon the nature of the initiator for the addition reaction.

The solvent is chosen such that its reflux temperature is close to the optimum temperature of operation for the initiator.

This process results in a solution of co-polymer according to the invention.

Dispersion polymerisation can be carried out in a liquid medium, usually an aqueous medium that is a solvent for the monomers but a non-solvent for the co-polymer.

Examples of such liquid media are ethanol/water and acetone/water.

This process results in an aqueous emulsion that is essentially a complex mixture of co-polymers according to the invention, addition polymer containing steric stabilising units but no amine-group containing units and addition polymer containing amine group-containing units but no steric stabilising units.

In this context, reference to 0.025 to 0.5 milli-equivalents of amine per gram of polymer means milli-equivalents of amine per gram of the complex mixture.

The quaternisation step can be carried out as previously described.

The co-polymers of this invention are used as electrodepositable coating compositions in the form of dispersions in an aqueous carrier. Such dispersions or emulsions are formed either directly during the polymerisation process or by emulsifying a preformed polymer.

Coating compositions can also comprise other standard ingredients for example pigments, fillers anti-corrosive agents, crosslinking agents and other polymer-modifying materials.

The compositions can be used in a standard electrocoating process.

The article to be coated is immersed as a cathode in a bath and a current is passed between the article and a counter electrode.

The following Examples illustrate the invention.

## EXAMPLES

### Example 1

#### 1. Preparation of Polymer

| Charge A | Parts by Weight |
|---|---|
| toluene | 43.115 |
| Charge B | |
| methylmethacrylate<br>2-ethylhexylacrylate<br>glycidylmethacrylate<br>dimethylaminoethyl methacrylate<br>methoxypolyethyleneglycol ester of methacrylic acid (60.3% solution in toluene of 2000 mol. wt.)<br>azodiisobutyronitrile | 23.697<br>22.505<br>2.587<br>0.359<br>4.311<br>1.034 |
| Charge C | |
| azodiisobutyronitrile | 1.034 |
| Charge D | |
| p-nitrobenzoic acid<br>Armeen DMCD (ex Armoer Hess) | 2.242<br>0.050 |

The mixture Charge B was added with stirring over 2 hours to a hot (80°C) mixture of Charge A under nitrogen. When the addition was completed, the mixture of charges A and B was kept at 80°C for a further hour. After this time Charge C was added:after 1 hour. (When the addition of Charge C was completed) the temperature of the reaction mixture was heated at reflux (130°C) for 1 hour. The heat was removed to allow the reflux to subside and Charge D was added. The mixture so obtained was heated under reflux again (130°C) until a resin aliquot had an acid value of 0.5 mg KOH/g of solids (1 hour), and yielded a solution of polymer having a 76.5% solids content.

2. Quaternisation of Polymer

The polymer was quaternised by adding 0.464 parts of benzyl chloride to 99.563 parts of the above polymer solution and heating the mixture, under a nitrogen blanket with stirring, to 120°C for 3 hours.

3. Preparation of Emulsion

| Charge A | Parts by Weight |
|---|---|
| deionised water<br>acetone<br>butylcellosolve | 73.243<br>3.825<br>0.765 |
| Charge B | |
| polymer from para 2 above<br>acetone | 19.445<br>2.722 |

Warm (45°C) mixture Charge A was added to Charge B at 40°C and the mixture so obtained was passed through a high speed dispersion emulsifier. During this emulsification step, most of the acetone was lost through evaporation to yield an emulsion having a solids content of 15% w/v and CVV of -0.64 units.

4. Electrodeposition of Paint

A phosphated steel panel was immersed in an aliquot of emulsion prepared as described in paragraph 3 above in an electrodeposition cell. A potential difference of 40 v. was applied between the cathode and the anode for 30 seconds and a thick deposit was observed to form on the phosphated steel panel.

Example 2

This example was comparative.

1. Preparation of Polymer

The polymer was made as described in Example 1 but omitting the monomer dimethylaminoethyl methacrylate and the quaternisation step.

2. Preparation of Emulsion

The emulsion was prepared using the polymer of paragraph 1 of this Example using the method described in Example 1.3 to yield an emulsion having a solids content of 15% wt/vol and a CVV of 0.

3. Electrodeposition of Paint

An attempt was made to electrodeposit the emulsion prepared as described in Example 1.4 applying potential differences from 20 v. to 300 v. between the cathode and counter electrode for 3 minutes. No resin deposited.

Example 3

1. Preparation of Aqueous Polymer Dispersion

A dispersion of polymer in 1:1 aqueous solution was prepared using the method described by C.W.A. Bromley et.al., Colloid and Surfaces January 1986 pp 1-11 using monomers in the following percentages:

| | |
|---|---|
| methoxypolyethyleneglycol 2,000 ester of methacrylic acid | 6.2 |
| methyl methacrylate | 43.2 |
| 2-ethylhexyl acrylate | 40.9 |
| dimethylaminoethyl methacrylate | 0.7 |
| 1-(4 -nitrobenzoyloxy)-2-hydroxypropyl methacrylate | 9.0 |

The product so obtained contained 47.24% by weight of polymeric material. The ethanol was removed by evaporation at reduced pressure and the residue so obtained was diluted with deionised water to 15% solids content. The product so obtained had a conductivity of 84μs at 25°C.

The dispersion was tested for its electrodeposition properties on bonderite phosphated steel panels as cathode ("Bonderite" is a Registered Trade Mark) as shown in Table 1 below.

Table 1

| Run Nos | Bath Temp | Duration | Applied voltage | Coulombs passed | Deposit on cathode |
|---|---|---|---|---|---|
| 1. | 20 °C | 60 secs | 80 V | 35.7 | thick white deposit formed |
| 2. | 20 °C | 30 secs | 80 V | 16.7 | white deposit formed |
| 3. | 20 °C | 120 secs | 80 V | 65.6 | very thick white deposit formed |

Example 4

This Example is comparative and is to be compared with Example 3.

1. Preparation of Aqueous Polymer Dispersion

An aqueous dispersion of polymer was prepared as described in Example 3 above from monomers in the following percentages:

| | |
|---|---|
| methoxypolyethyleneglycol 2000 ester of methacrylic acid | 6.2 |
| methyl methacrylate | 48.55 |
| 2-ethylhexyl acrylate | 45.25 |

The initial polymeric dispersion in 1:1 aqueous ethanol had a solids content of 47.24%. After evaporation of the ethanol and dilution with deionised water an emulsion of 15% solids content was obtained. This had a conductivity of 66$\mu$scm$^{-1}$ at 25 °C.

The dispersion was tested for its electrodeposition properties by the method described in Example 3 and the results are shown in Table 2 below.

Table 2

| Run Nos | Bath Temp | Duration | Applied voltage | Coulombs passed | Deposit on cathode |
|---|---|---|---|---|---|
| 1. | 25 °C | 60 secs | 80 V | 22.5 | none |
| 2. | 25 °C | 60 secs | 170 V | 110.2 | none |
| 3. | 45 °C | 60 secs | 80 V | 33.6 | none |
| 4. | 45 °C | 60 secs | 165 V | 100 | none |

Example 5

5.1 Preparation of Polymer

| | parts by weight |
|---|---|
| Charge A | |
| Toluene | 420.00 |
| | |
| Charge B | |
| methyl methacrylate | 317.50 |

| Charge B contd. | parts by weight |
|---|---|
| 2-ethylhexyl acrylate | 301.00 |
| glycidyl methacrylate | 39.00 |
| dimethylaminoethyl methacrylate | 5.50 |
| methoxypolyethyleneglycol methacrylate (MW 750;94% in toluene | 124.50 |
| azodiisobutyronitrile | 14.00 |

The mixture Charge B was added over 2 hours with stirring to hot (80°C) Charge A. When the addition was completed two further portions of azodiisobutyronitrile were added at 0.75 hours intervals to produce a solution of polymer in toluene.

5.2. Quaternisation

The solution obtained as described in paragraph 1 above was heated to 119°C distilling off part of the solvent. Benzyl chloride (4.8 parts) was added to the solution and the mixture so obtained was heated at 119°C for a further 2 hours to produce a clear solution of polymer having a solids content of 66.6% an amine value of 3.6mg $KOHg^{-1}$.

5.3 Preparation of Emulsion

| Charge | Parts by weight |
|---|---|
| Polymer from paragraph 2 above | 65.00 |
| Deionised water | 223.00 |
| Acetone | 5.00 |
| Butyl cellosolve | 2.70 |

The charge mixture was emulsified in a high speed stirrer to give a stable emulsion having a solids content of 11%, a conducitivty of 9µs $cm^{-1}$ at 25°C and a pH of 8.2.

5.4 Electrodeposition

A phosphated steel panel was immersed as cathode in the emulsion and an electric current passed at 80 volts for 30 seconds. A very thick, creamy deposit was obtained. The coulomb yield of an unrinsed

panel was 108 mg/coulomb.

Example 6

1. Preparation of Polymer

| Charge | |
|---|---|
| Methylmethacrylate | 363 parts |
| 2-Ethylhexyl acrylate | 344 parts |
| Dimethylaminoethyl methacrylate | 18 parts |
| Glycidyl methacrylate | 39 parts |
| Methoxypolyethyleneglycol methacrylate(mol. wt. 2000; 60% in toluene) | 68.5 parts |
| Azodiisobutyronitrile | 15 parts |

The charge mixture described above was added with stirring over 2.5 hours to a hot (80 °C) methylisobutylketone (420 parts) in a nitrogen atmosphere. When the addition was completed, heating was continued and two further portions (0.7 parts) of azodiisobutyronitrile were added after 0.7 hours in intervals to yield a solution of polymer.

2. Quaternisation

A portion (172 parts) of solvent was removed by distillation from the solution prepared as described in paragraph 1 above by heating to 119 °C. Benzyl Chloride (15.8 parts) was added to the concentrated solution and heating was continued at 125 °C for a further 2 hours to produce a resin solution having a solids content of 74% and an amine value of 9.8 mg $KOHg^{-1}$.

3. Preparation of Emulsion

A portion of graft co-polymer prepared as described in paragraph 2 above (105 parts) was diluted with methylisobutylketone (13 parts). The polymer solution was emulsified in a blend of deionised water and methylisobutylketone (4 parts) using a high speed stirrer. The stable emulsion produced had a conductivity of 101$\mu$s $cm^{-1}$ at 25 °C and a pH of 7.5.

4. Electrodeposition

A phosphated steel panel was immersed as cathode in the emulsion and an electric current passed at 80 volts for 30 seconds. A very thick deposit was obtained. Coulomb yield was 156 $mgq^{-1}$.

Example 7

1. Preparation of Polymer

The polymer was prepared by the process described in Example 6 above using the following reactants:-

| | parts |
|---|---|
| Toluene | 356.00 |
| Methyl methacrylate | 345.00 |
| 2-ethylhexyl acrylate | 328.00 |
| Dimethylaminoethyl methacrylate | 10.10 |
| Methoxy PEG methacrylate - (M. wt 2000; 60% in toluene) | 60.00 |
| azodiisobutyronitrile | 2.00 |
| primary octylmercaptan | 10.00 |
| azodiisobutyronitrile | 0.50 |

The product obtained was a solution of 75.6% solids content and amine value of the resin was $6mgKOHg^{-1}$.

2. Preparation of Emulsion

Graft co-polymer prepared as described in paragraph 1 above (57 parts ) was neutralised with aqueous lactic acid solution (80%;0.4 parts). The neutralised graft co-polymer was emulsified in deionised water (225 parts) with a high speed stirrer in an enclosed apparatus to produce a coarse emulsion of 15% solids content with a conductivity of $224\mu cm^{-1}$ at 25°C and pH of 3.

3. Electrodeposition

A phosphated steel panel was immersed as cathode in emulsion and an electric current passed at 80 volts for 40 seconds. A thin film was electrodeposited. The coulomb yield was 39mg/coulomb.

Example 8

1. Preparation of P-Nitrobenzoic acid: Glycidylmethacrylate Adduct

| Charge | Parts |
|---|---|
| Glycidyl methacrylate | 100.00 |
| p-Nitrobenzoic acid | 94.00 |
| Armeen DMCD | 2.30 |
| Hydroquinone | 0.40 |
| Toluene | 190.00 |

The above reagents were mixture and the charge mixture was heated with stirring for 2.25 hours at 116°C to produce a water thin clear product with an acid value les than 1.

2. Preparation of Polymer

| Charge A | Parts |
|---|---|
| Methyl methacrylate<br>2-Ethylhexyl acrylate<br>Dimethylaminoethyl methacrylate<br>Methoxypolyethyleneglycol methacrylate (mol. wt, 2000; 93% in Toluene)<br>p-Nitrobenzoic acid-glycidyl methacrylate adduct<br>Azodiisobutyronitrile | 332.00<br>314.00<br>5.50<br>138.00<br>63.00<br>7.80 |
| **Charge B** | **Parts** |
| Toluene | 348.00 |

The mixture Charge A was made up and added over 2.5 hours to hot (80°C) Charge B. The temperature was maintained at 80°C and two further portions of azodiisobutyronitrile (0.4 parts) were added at 0.75 hour intervals.

3. Quaternisation of Polymer

Benzyl chloride (4.8 parts) was added to the reaction product described in paragraph 2 above and heating continued at 122°C for a further 3 hours to produce a clear solution of polymer of molecular weight (weight average) 18000, acid value 0.2mg KOH/g n.v., epoxy value 1.5 mg KOH/g n.v. and amine value 3.6 mg KOH/g n.v.

4. Preparation of Emulsion

Quaternised graft co-polymer prepared as described in paragraph 3 above (65 parts) was emulsified in a mixture of deionised water (202 parts) acetone (10 parts) and butyl cellosolve 7 parts, using a high speed stirrer in an enclosed apparatus to give a stable emulsion of 13% solids content, pH5.3 and 41µs/cm at 25°C.

5. Electrodeposition

5.1 A phosphated steel panel was immersed as a cathode in the emulsion and an electric current passed at 80 volts for 15 seconds to produce a film which on rinsing and force drying in an oven at 120°C produced a smooth clear film on the panel.

5.2 A second electrodeposition was carried out as described in paragraph 5.1 above using a portion of emulsion prepared as described in paragraph 4 above which had been made alkaline to pH7.8 with ammonia. The conducitivty of this emulsion was 104$\mu scm^{-1}$ at 25°C.

5.3 A third electrodeposition was carried out as described in paragraph 5.1 above using a portion of the emulsion prepared as described in paragraph 4 above which had been made acidic to pH3.8 and conductivity of 62$\mu scm^{-1}$ when lactic acid was added.

The results obtained from the three electrodepositions are shown in Table 3 below

Table 3

| Run Nos | Temp | Q | wt. film | coulomb yield mgs $q^{-1}$ |
|---|---|---|---|---|
| 5.1 | 23°C | 1.6 | 0.189g | 118 |
| 5.2 | 23°C | 2.1 | 0.097g | 46 |
| 5.3 | 23°C | 1.3 | 0.088g | 68 |

In Table 3 Temp means the temperature of deposition; Q means the amount of electricity passed

(Coulombs); wt. film means the weight of polymer film deposited.

Example 9

1. Preparation of Polymer

| Charge A | Parts |
|---|---|
| Toluene | 34.626 |
| Charge B | |
| Methyl methacrylate<br>2-Ethyl hexylacrylate<br>Glycidyl methacrylate<br>Dimethylaminoethyl methacrylate<br>Methoxypolyethyleneglycolmethacrylate (mol.wt. 2000; 93% in toluene)<br>Azodiisobutyronitrile | 28.615<br>27.205<br>3.215<br>0.453<br>5.185<br>0.643 |
| Charge C | |
| Azodiisobutyronitrile | 0.033 |
| Charge D | |
| Azodiisobutyronitrile | 0.025 |

The mixture Charge B was added over 3 hours to hot (80°C) Charge A. When the addition was complete, heating was contrived for a further 1 hour and Charge C was added. Charge D was then added after 40 min and the temperature was maintained at 80°C for a further 40 min. The solution obtained has a solids content of 64%.

2. Quaternisation of Polymer

A portion (99.585 parts) of polymer solution prepared as described in paragraph 1 above was mixed with benzyl chloride (0.415 parts) and the mixture was heated at reflux under nitrogen for 3 hours. the solution so obtained was allowed to cool to room temperature to yield a solution of quaternised polymer.

3. Preparation of Emulsion

A portion (23.442 parts) of solution prepared as described in paragraph 2 above was emulsified in a high speed homogeniser with a warm (40°C) mixture of acetone (3.863 parts) and deionised water (72.69 parts).
The solution so obtained was allowed to cool to room temperature.

4. Electrodeposition

The emulsion obtained as described in paragraph 3 above was deposited as a clear uniform film on a phosphated steel panel as a cathode on passing a current at 80 volts for 60 seconds.

Example 10

1. Preparation of Polymer

| | Parts |
|---|---|
| Charge A | |
| Toluene | 34.633 |

| | parts |
|---|---|
| Charge B | |
| Methyl methacrylate | 28.008 |
| 2-Ethyl hexylacrylate | 26.554 |
| Dimethylaminoethyl methacrylate | 4.900 |
| Methoxypolyethyleneglycol 2000 ester of methacrylic acid | 5.850 |
| Azodisobutyronitrile | 0.643 |
| Charge C | |
| Azodiisobutyronitrile | 0.033 |
| Charge D | |
| Azodiisobutyronitrile | 0.025 |

The mixture charge B was added over 3 hours to hot (80°C) charge A with stirring under nitrogen. When the addition was completed, the temperature was maintained at 80°C for a further 40 minutes. Charge C and charge D were added sequentially maintaining the reaction mixture at 80°C for 40 minutes after each addition. The mixture was allowed to cool to room temperature to produce a solution of polymer.

2. Quaternisation

Benzyl chloride (4.323 parts) was added with stirring to a portion (95.672 parts) of polymer solution prepared as described in paragraph 1 above and the miture was heated to 110°C with stirring for 3 hours.

The solution of quaternised polymer so obtained was diluted with a 1:1 mixture of acetone and toluene to a 50% w.w. solution.

3. Preparation of Emulsion

A portion of polymer solution prepared as described in paragraph 2 above (30.024 parts) was emulsified in a mixture of deionised water (68.558 parts) and acetone (1.418 parts) to produce a fine emulsion with an electrical conductivity of 112µscm$^{-1}$.

4. Electrodeposition

The emulsion obtained as described in paragraph 3 above was deposited as a clear uniform film on a phosphated steel panel as cathode on applying a current at 80 volts for 60 seconds.

Example 11

1. Preparation of Emulsion Stabiliser

| Charge A | Parts |
|---|---|
| Epikote 1001 (Epikote is a Registered Trade Mark of Shell Chemicals)<br>polycaprolactone diol (PCP-0200 Ex Union Carbide)<br>methylisobutylketone | 4516<br>1134<br>771 |

The mixture Charge A was heated under nitrogen to reflux and 21g of adventitious water were removed by azeotropic distillation; the charge was made up to the original composition by adding 21 grams of methylisobutyl ketone to replace the water removed.

| Charge B | |
|---|---|
| Dimethylbenzylamine catalyst | 14.7 |

Charge B was then added to Charge A and reflux at 145° C was maintained for 2 hours.

| Charge C | |
|---|---|
| Methoxypolyethyleneglycol (of 2000 mol.wt.) | 675 |

Charge C was added to the ingredients as the reflux temperature was maintained for a further 4½ hours.

2. Preparation of Polymer B

| | |
|---|---|
| Polymer A<br>diethylamine | 1513<br>28 |

were heated together at 80° C for 6 hours. Then Benzoic acid 24.7 parts were added, the temperature of the mixture was brought to reflux and maintained for approximately 5½ hours, that is until the acid value was less than 1.0 mgKOH/g resin w/w.

Quaternisation of Polymer B

Benzyl chloride (52 parts by weight) was then added and the temperature of the ingredients was maintained for 4½ hours at 100° C.

3. Preparation of Resin Blend

Quaternised Polymer B (1118 parts by weight) were blended with 600 parts of a highly butylated melamine formaldehyde resin (67% solution in butanol /xylene).

4. Preparation of Emulsion

| Charge A | Parts by weight |
|---|---|
| deionised water<br>butylcellosolve | 663<br>44 |
| Charge B | Parts by weight |
| resin blend (item 3 above) | 393 |

Warm (45° C) Charge B was added to Charge A and passed through a high speed dispersion emulsifier to yield an emulsion having a non vol content of 22%; this on dilution to 13% solids with deionised water gave an emulsion whose conductivity was 260mscm$^{-1}$ at 25° C (and a pH of 6.1)

5. A phosphated steel panel was immersed in an aliquot of the diluted emulsion (13% weight volume) in an electrodeposition cell. A potential difference of 80 volts was applied between the cathode and the anode for 20 seconds. The panel was rinsed with water, "blow" dried with air for 30 seconds and baked in an oven at 180° C for 30 minutes. A clear,smooth, glossy film of 7 micrometers thickness was obtained.

Example 12

1.

| Charge A | parts by weight |
|---|---|
| Base Polymer A (from Example 11)<br>diethylamine | 1523<br>14.5 |
| Charge B | |
| Benzoic acid | 47.7 |

Charge A was heated together under nitrogen for 2½ hours at 80° C. Charge B was then added and the temperature was increased to 130° C and maintained for a further 4 hours.

2. Quaternisation of Polymer

Benzyl chloride (27.9 parts by weight) were added to the product of 1 (above) and then heated for 3 hours at a temperature of 100° C.

3. Preparation of Resin Blend

Quaternised polymer 2 (above) (982 parts) was blended with melamine formaldehyde resin (525 parts) by mixing at 100° C.

4. Emulsification of Polymer

394 parts by weight of the resin blend of item 3 above were emulsified in a mixture of 662 parts of deionised water and 44 parts of butylcellosolve (both resin blend and aqueous solution at approximately 45° C) wer emulsified by means of a high speed dispersion emulsifier as previously described to give an emulsion of 22% solids content. This emulsion was then further diluted with deionised water to 13% non vol. content which had an electrical conductivity of 103µscm$^{-1}$ at 25° C and pH6.

5. Electrodeposition

A phosphated steel panel was immersed in an aliquot of the diluted emulsion in an electrodeposition cell. A potential difference of 80 volts was applied between the cathode and the anode for 20 seconds. After rinsing with water and stoving at 180 °C for 30 minutes in an oven, a clear, glossy film 21 micrometers in thickness was found to have been obtained.

Comparative Test

This test is designed to show the difference between an emulsion that is charge or ionically stabilised and one that is sterically stabilised. The test is carried out by adding a polyelectric solution to an aliquot of emulsion to see when the emulsion coagulates.

A solution of sodium hexametaphosphate (Calgon 10% w.v.) was titrated against an aliquot (100g) of emulsion under test. The titre necessary to produce coagulation was noted.

| Emulsion | Type | Titre |
|---|---|---|
| PPG standard electrocoat primer | Cationic | <5 mls |
| PPG industrial uniprime | Cationic | <5 mls |
| ICI Cathodic | Cationic | <5 mls |
| ICI Electroclear 2000 | Cationic | <5 mls |
| Valspar Low cure E-Coat | Cationic | <5 mls |
| EP109760 Example 1 | Non-ionic | 250 mls |
| Example 7 hereof | Non-ionic | 100 mls |
| Example 8 hereof | Non-ionic | 188 mls |

This test proves that the emulsion typified by Examples 7 and 8 are sterically stabilised not ionically stabilised because they tolerated the addition of a large quantity of polyelectrolyte before coagulation.

**Claims**

1. A co-polymer that is capable of forming sterically stabilised dispersions in aqueous media, comprising steric stabilising units having water soluble poly(oxyalkylene) claims, structural units and amine group containing units, the amine group containing units comprising tertiary amine groups or an acid addition salt thereof or quaternary ammonium salt groups; the amount of amine group-containing units being such that the co-polymer contains from 0.025 to 0.5 milli-equivalents of amine per gram of co-polymer.

2. A co-polymer as claimed in claim 1 and being a condensation polymer comprising structural units derived from di-, tri- and tetra carboxylic acids of general formula (1):-

$A(-CO)-_a$ (1)

where A is the residue of an aromatic, alicyclic or aliphatic carboxylic acid and a is 2, 3 or 4; and units derived for di- or triols of general formula (2):-

$D(-O)-_b$ (2)

where D is the residue of an aromatic, alicyclic or aliphatic di- or triol and b is 2 or 3;

amine groups containing units of formula (3):-

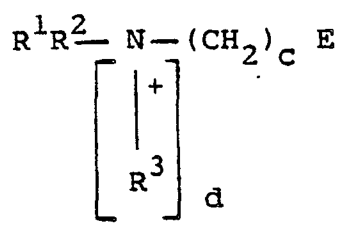

(3)

where $R^1$ is $C_{1-6}$ alkyl,
$R^2$ is $C_{1-6}$ alkyl,
$R^3$ is hydrogen, $C_{1-6}$ alkyl or benzyl or
$R^1$ and $R^2$ together represent the residue of a piperidine or morpholine group and
E is -O-, -N<, -NH-, -OCO- or $-CO_2-$,
c is from 2 to 6;
d is zero or 1
and steric stabilizing units having water soluble poly(oxyalkylene) chains.

3. A co-polymer as claimed in claim 2 where the amine group-containing unit is of formula (3) where E is -O-.

4. A co-polymer as claimed in claim 2 where the amine group containing unit of formula (3) is where E is -N<.

5. A co-polymer as claimed in claim 2 where the amine group containing units of formula (3) is where E is -NH-.

6. A co-polymer as claimed in claim 1 and being an epoxy resin comprising structural units of general formula (7):-

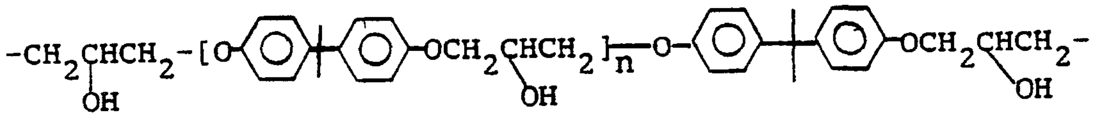

(7)

where n is from 0 to 4;
amine group-containing units of general formula (8):-

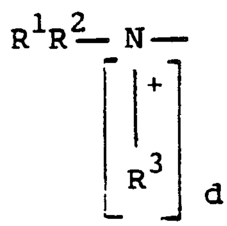

(8)

where $R^1$ and $R^3$ and d are as defined with reference to formula (3) and steric stabilizing units having water soluble poly(oxyalkylene) chains.

7. A co-polymer as claimed in claim 1 and being an addition polymer comprising a plurality of structural units which are the same or different and are of formula (9):-
$-CH_2-CR^4R^5-$ (9)
where $R^4$ is hydrogen or $C_{1-6}$ alkyl and
$R^5$ is a group $-CO_2R^6$ where $R^6$ is $C_{1-10}$ alkyl or provided $R^4$ is hydrogen, $R^5$ is phenyl optionally substituted with one or more $C_{1-4}$ alkyl groups;
amine groups containing units of formula (10):-
$-CH_2-CR^7R^8-$ (10)
where $R^7$ is hydrogen or $C_{1-6}$ alkyl and
$R^8$ is a group where n is
from 2 to 6, A is a group $-CO_2-$, -CONH-;

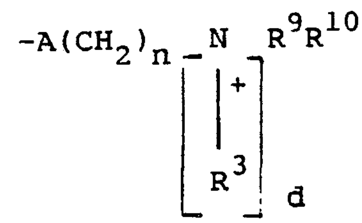

or provided $R^7$ is hydrogen, $R^8$ is pyridino, N-$C_{1-6}$ alkyl pyridino or N-benzyl pyridino;
$R^9$ is $C_{1-6}$ alkyl;
$R^{10}$ is $C_{1-6}$ alkyl or
$R^9$ and $R^{10}$ taken together form a piperidino or morpholino group;
$R^3$ is hydrogen, $C_{1-6}$ alkyl or benzyl and
d is zero or 1 and
steric stabilizing units having water soluble poly(oxyalkylene) chains.

8. A co-polymer as claimed in claim 7 where $R^4$ is hydrogen or methyl.

9. A co-polymer as claimed in claim 8 where $R^4$ is hydrogen and $R^5$ is a group $-CO_2R^6$ where $R^6$ is methyl.

10. A co-polymer as claimed in claim 8 where $R^4$ is hydrogen and $R^5$ is a group $-CO_2R^5$ where $R^6$ is 2-ethylhexyl.

11. A co-polymer as claimed in any one of claims 7 to 10 also comprising auxiliary structural units of formula (11):-

$-CH_2-CR^{12}R^{13}-$ (11)

where $R^{12}$ is hydrogen $C_{1-6}$ alkyl particularly methyl and $R^{13}$ is $-CO_2R^{14}$ where $R^{14}$ is 1,2-epoxypropyl or 1-(4-nitrobenzoyloxy)-2-hydroxylpropyl.

12. A co-polymer as claimed in any one of claims 7 to 11 where A is $-CO_2-$ and n is 2.

13. A co-polymer as claimed in ay one of claims 7 to 12 where $R^9$ and $R^{10}$ are both methyl d is 1 and $R^{11}$ is benzyl.

14. A compound as claimed in any one of claims 7 to 13 where the stabilising units are derived from compounds of general formula (12) or formula (13):-

$CH_3O(C_2H_4O)_x(C_4H_8O)_yCO.\overset{CH_3}{\overset{|}{C}} = CH_2$ (12)

$CH_2 = CH.CO.O(C_4H_8O)_y(C_2H_4O)_x OCH_3$ (13)

where x and y have values corresponding to molecular weight for poly(oxyethylene) and poly(oxybutylene) blocks of 2,000 and 7,000 respectively.

15. A co-polymer as claimed in claim 14 where y is zero and x is from 11 to 90.

16. A process for preparing a co-polymer as claimed in claim 1 which comprises reacting together precursors for structural units, precursors for amine group containing units, precursors for steric stabilizing units and thereafter optionally quaternizing or salifying the product so obtained.

17. A coating composition comprising a co-polymer as claimed in any one of claims 1 to 15 in dispersion in an aqueous carrier.

18. A process of electrocoating which comprises immersing an article to be coating as a cathode in an aqueous dispersion as claimed in claim 17 and passing an electric current between that article and a counter electrode.